# EUROPÄISCHE PATENTSCHRIFT

(11) **EP 4 519 665 B1**
(45) Veröffentlichungstag und Bekanntmachung des Hinweises auf die Patenterteilung: **29.07.2026**
(21) Anmeldenummer: 23725570.8
(22) Anmeldetag: 21.04.2023
(51) Int. Cl.: G01N 27/404

(54) **ELEKTROCHEMISCHER GASSENSOR ZUR DETEKTION HOHER PHOSPHINKONZENTRATIONEN**
ELECTROCHEMICAL GAS SENSOR FOR THE DETECTION OF HIGH PHOSPHINE CONCENTRATIONS
CAPTEUR DE GAZ ÉLECTROCHIMIQUE POUR LA DÉTECTION DE CONCENTRATIONS ÉLEVÉES DE PHOSPHINE

(30) Priorität: 06.05.2022 DE 102022111351; 28.02.2023 DE 102023104898
(43) Veröffentlichungstag der Anmeldung: 12.03.2025
(73) Patentinhaber: Dräger Safety AG & Co. KGaA, 23560 Lübeck (DE)
(72) Erfinder: HAUPT, Stephan, 23558 Lübeck (DE); NAUBER, Andreas, 23558 Lübeck (DE); ECKHARDT, Rolf, 23558 Lübeck (DE); REIER, Tobias, 23558 Lübeck (DE); GLIECH, Manuel, 23558 Lübeck (DE); WÄTJEN, Florian, 23558 Lübeck (DE)
(86) Internationale Anmeldenummer: PCT/DE2023/100291
(87) Internationale Veröffentlichungsnummer: WO 2023/213347

(56) Entgegenhaltungen:
- EP-A1- 2 975 390
- DE-A1- 102016 003 452
- US-A- 5 997 706
- US-A1- 2022 099 614

## Beschreibung

Elektrochemischer Gassensor für ein Analytgas umfassend eine Hydridverbindung, Messgerät zur quantitativen oder qualitativen Bestimmung eines Analytgases umfassend eine Hydridverbindung und Verfahren zur Konzentrationsbestimmung eines Analytgases umfassend eine Hydridverbindung

Die vorliegende Erfindung betrifft einen elektrochemischen Gassensor für gasförmige Hydride, wobei der Gassensor zumindest ein Gehäuse mit einer darin angeordneten ersten Arbeitselektrode und zweiten Arbeitselektrode, einer Gegenelektrode und einer Referenzelektrode umfasst. Der Gassensor umfasst ferner einen mit der ersten Arbeitselektrode, die zweiten Arbeitselektrode, der Gegenelektrode und der Referenzelektrode in leitendem Kontakt stehenden Elektrolyten. Die Referenzelektrode ist zwischen der ersten Arbeitselektrode und der zweiten Arbeitselektrode angeordnet. Weiterhin umfasst die vorliegende Erfindung ein Messgerät zur quantitativen bzw. qualitativen Bestimmung eines Analytgases und ein Verfahren zur Konzentrationsbestimmung eines Analytgases.

### Stand der Technik

Zur Schädlingsbekämpfung unter anderem in Getreide wird in der Landwirtschaft weltweit Phosphin eingesetzt. Bei diesem Vorgang, der man auch als Entwesung bezeichnet, wird beispielsweise Getreide o. ä. mit Phosphin (auch bezeichnet als Phosphan, Monophosphan, Phosphorwasserstoff; PH3) begast. Dadurch wird versucht, Schäden im Getreide, welche beispielsweise durch Insektenfraß oder auch durch Verunreinigungen verursacht durch Insektenexkremente auftreten, zu verringern oder gar zu verhindern. Hierbei ist es zwingend notwendig, dass im Getreide eine gewisse Mindestkonzentration an Phosphin erreicht wird, um sämtliche im Getreide befindlichen Insekten bzw. Schädlinge zu erreichen und zu eliminieren. Problematisch ist dabei, dass die Konzentration an Phosphin einen gewissen Schwellenwert nicht überschreiten darf, da die Schädlinge bzw. die Insekten bei Überschreitung einer bestimmten Gaskonzentration an Phosphin in eine sogenannte chemische Schutzstarre verfallen, ab welcher der Metabolismus heruntergefahren wird, sodass praktisch kein Stoffwechsel mehr stattfindet und folglich auch kein Phosphin mehr aufgenommen wird. Ein weiteres bekanntes Problem ist es, dass Phosphin ein äußerst giftiges, im reinen Zustand geruchsloses Gas ist, welches ab einer Temperatur von etwa 150 °C selbstentzündlich ist. Auch unter dem Aspekt des Arbeitsschutzes ist es daher erforderlich, die Konzentration des eingesetzten Phosphins zu kennen.

Für Arbeiter in Prozessräumen wie beispielsweise Getreidesilos gibt es tragbare und stationäre Gaswarngeräte, die in der Regel mit elektrochemischen Gassensoren bestückt sind und den Arbeitsbereich bzw. den Arbeiter gegen zu hohe Konzentrationen eines Analytgases, beispielsweise Phosphin, absichern. Die zulässige Arbeitsplatzkonzentration liegt, je nach Land, im einstelligen ppmbis zum mittleren ppb-Bereich.

Elektrochemische Gassensoren zur Konzentrationsbestimmung von Hydridgasen wie beispielsweise Phosphin und/oder Arsin sind aus dem Stand der Technik bereits bekannt. US 5 997 706 A, EP 0 436 148 B1 und DE 198 32 395 C1 offenbaren elektrochemische Gassensoren zum Nachweis von Hydridgasen wie Arsin und Phosphin, enthaltend eine Arbeitselektrode und eine Referenzelektrode in einem Elektrolytraum, der mit einem Elektrolyten gefüllt und mit einer gasdurchlässigen Membran abgeschlossen ist. KR 2020 0 082 563 A offenbart eine Arbeitselektrode zur Verwendung in einem Phosphinsensor. DE 199 39 011 C1 offenbart einen elektrochemischen Gassensor mit einer gaspermeablen Membran, bei welchem die Arbeitselektrode aus diamantartigem Kohlenstoff ausgestaltet und als dünne Schicht auf der gaspermeablen Membran aufgebracht ist. DE 101 59 616 B4 lehrt einen elektrochemischen Gassensor für Phosphin und Arsin mit einer verbesserten Querempfindlichkeit.

Aus EP 2 975 390 A1 ist ein elektrochemischer Gassensor mit den Merkmalen des Oberbegriffs bekannt.

Die aus dem Stand der Technik bekannten elektrochemischen Gassensoren für Hydridgase haben oftmals das Problem, dass bei den zur erfolgreichen Entwesung notwendigen hohen Konzentrationen an Analytgas, wie beispielsweise Phosphin und/oder Arsin, das Analytgas beim Eindiffundieren in den elektrochemischen Gassensor nicht vollständig an der Arbeitselektrode (auch Messelektrode genannt) umgesetzt wird, sodass im ungünstigsten Fall das Analytgas an die Referenzelektrode gelangt. Dies würde dazu führen, dass das Arbeitspotential der Arbeitselektrode verschoben wird, wodurch der chemische Umsatz an der Arbeitselektrode unterbunden wird und somit die Empfindlichkeit des Sensors auf das Analytgas soweit absinkt, dass dieses nicht mehr nachgewiesen werden kann bzw. die im Messsystem hinterlegte Sensorempfindlichkeit mit dem zu geringen Messstrom zu einem falschen Messergebnis gerechnet wird.

Es besteht somit nach wie vor ein Bedarf an elektrochemischen Gassensoren, welche insbesondere für die Messung bzw. zum Nachweis von Analytgasen umfassend eine Hydridverbindung bei den zur Entwesung erforderlichen Konzentrationen eingesetzt werden können, und welche eine hohe Langzeitsignalstabilität d. h. ein zuverlässiges Messergebnis über einen langen Zeitraum bereitstellen können, ohne dass das Messergebnis nach einer gewissen Einsatzzeit auf geringe Messwerte "einbricht", das heißt verfälscht wird.

Aufgabe der vorliegenden Erfindung ist es unter anderem, einen elektrochemischen Gassensor bereitzustellen, welcher die aus dem Stand der Technik bekannten Probleme löst. Es soll somit ein elektrochemischer Gassensor bereitgestellt werden, welcher sich für die Messung bzw. Erkennung von einem Analytgas umfassend eine Hydridverbindung, wie beispielsweise Phospin (PH3), Boran (BH3), Diboran (B2H6), Arsin (AsH3), SeH2 und anderen eignet, welcher langzeitstabil ist, ohne dass die Messsignale nach einem gewissen Zeitpunkt "einbrechen" bzw. ungenau werden, und welche eine hohe Dauerbegasungsfestigkeit, d.h. eine hohe Langzeitsignalstabilität idealerweise auch über einen Zeitraum von wenigstens vier Stunden bis zu mehreren Monaten aufweist. Darüber hinaus ist es Aufgabe der vorliegenden Erfindung einen elektrochemischen Gassensor bereitzustellen, welcher kostengünstig vom Endabnehmer betrieben werden kann, ohne dass dieser eine hohe Wartungsintensität bzw. eine Vielzahl an Wartungszyklen benötigt.

Diese und weitere Aufgaben werden durch die Gegenstände der unabhängigen Patentansprüche gelöst. Vorteilhafte Ausgestaltungen sind Gegenstand der abhängigen Patentansprüche bzw. nachfolgend weiter beschrieben.

### Beschreibung der Erfindung

Überraschenderweise wurde gefunden, dass bei Anordnung wenigstens einer ersten Arbeitselektrode und einer zweiten Arbeitselektrode und einer zwischen der ersten Arbeitselektrode und der zweiten Arbeitselektrode angeordneten Referenzelektrode innerhalb des Gehäuses die Signalstabilität eines erfindungsgemäßen elektrochemischen Gassensors auch bei hohen Konzentrationen des Analytgases von bis zu 1000 ppm und mehr erzielt werden konnte, ohne dass das Messsignal des erfindungsgemäßen elektrochemischen Gassensors "einbricht", d. h., dass das Messsignal auch bei den zur Entwesung erforderlichen hohen Konzentrationen an Analytgas stabil bleibt.

Erfindungsgemäß wird elektrochemischer Gassensor für ein Analytgas umfassend wenigstens eine Hydridverbindung vorgeschlagen, wobei der Gassensor wenigstens umfasst:
a) ein Gehäuse, wobei innerhalb des Gehäuses weiter angeordnet sind:
b) wenigstens eine erste Arbeitselektrode und eine zweite Arbeitselektrode;
c) eine Gegenelektrode;
d) eine Referenzelektrode, und
e) einen mit der ersten Arbeitselektrode, der zweiten Arbeitselektrode, der Gegenelektrode und der Referenzelektrode in leitendem Kontakt stehenden Elektrolyten,
wobei die Referenzelektrode zwischen der ersten Arbeitselektrode und der zweiten Arbeitselektrode angeordnet ist, und das Gehäuse (11) eine erste Diffusionsmembran und eine zweite Diffusionsmembran aufweist, wobei die zweite Diffusionsmembran im Wesentlichen gegenüberliegend der ersten Diffusionsmembran angeordnet ist.

Weiter wird ein Messgerät zur quantitativen oder qualitativen Bestimmung eines Analytgases vorgeschlagen, wobei das Messgerät einen erfindungsgemäßen elektrochemischen Gassensor aufweist.

Offenbart wird ferner eine Verwendung eines erfindungsgemäßen elektrochemischen Gassensors und/oder eines erfindungsgemäßen Messgerätes zur Konzentrationsbestimmung eines Analytgases.

Daneben betrifft die vorliegende Erfindung ein Verfahren zur Konzentrationsbestimmung eines Analytgases umfassend eine Hydridverbindung mit einem elektrochemischen Gassensor.

### Detaillierte Beschreibung der Erfindung

Das Analytgas ist das Gas, mit dem der elektrochemische Gassensor beaufschlagt wird oder werden kann oder von welchem die Konzentration bestimmt wird. Üblicherweise diffundiert das Analytgas zusammen mit Luft aus der Umgebungsatmosphäre (Umgebungsluft) an den erfindungsgemäßen Gassensor, bzw. der erfindungsgemäße elektrochemische Gassensor wird damit beaufschlagt. Das Analytgas umfasst ein oder mehrere Hydridgase oder eine oder mehrere gasförmige Hydridverbindungen oder deren Dämpfe, vorzugsweise Phospin (PH3), Boran (BH3), Diboran (B2H6), Arsin (AsH3) und/oder Selan (SeH2). Bevorzugt wird der erfindungsgemäße elektrochemische Gassensor für Phosphin und/oder Arsin als Analytgas eingesetzt, besonders bevorzugt für Phosphin. Die genannten Hydridgase oder die genannten Hydridverbindungen werden im Sinne der vorliegenden Erfindung auch als Nichtmetallhydride bzw. Nichtmetallhydridverbindungen oder Halbmetallhydride bzw. Halbmetallhydridverbindungen bezeichnet. Typischerweise ist das Analytgas in der Umgebungsatmosphäre des Gassensors beinhaltet, kann aber auch dem Gassensor gesondert, z.B. in wohl definierten Dosen, batchweise o.ä. zugeführt werden.

Das Gehäuse des elektrochemischen Gassensors begrenzt diesen nach außen. Üblicherweise steht das Gehäuse nach außen hin mit der Umgebungsatmosphäre in Kontakt und bildet im Inneren des Gehäuses eine Aufnahme für die Elektroden wie die erste Arbeitselektrode, die zweite Arbeitselektrode, die Gegenelektrode und die Referenzelektrode sowie für den Elektrolyten. Das Gehäuse kann aus unterschiedlichen, für den Einsatz von elektrochemischen Gassensoren typischen Materialien hergestellt werden. Hierzu zählen beispielsweise Kunststoffe wie bspw. Polyethylen (PE), Polypropylen (PP), Perfluoralkoxy-Polymere (PFA), Fluorethylenpropylen (FEP) oder Polytetrafluorethylen (Teflon; PTFE). Das Gehäuse des elektrochemischen Gassensors weist weiterhin vorzugsweise ein Elektrolytreservoir für die Aufnahme des Elektrolyten auf, beispielsweise ausgestaltet als ein Ausgleichsvolumen.

Die erste Arbeitselektrode und/oder die zweite Arbeitselektrode umfassen in einer bevorzugten Ausgestaltung ein Elektrodenmaterial welches ausgewählt ist aus der Gruppe bestehend aus oder umfassend: Gold, Platin, Rhodium, Ruthenium und Iridium, bevorzugt Gold. Die erste Arbeitselektrode und die zweite Arbeitselektrode können sowohl aus unterschiedlichen Elektrodenmaterialien als auch aus identischen Elektrodenmaterialien hergestellt sein bzw. diese umfassen. In einer bevorzugten Ausgestaltung handelt es sich sowohl bei der ersten Arbeitselektrode als auch bei der zweiten Arbeitselektrode jeweils um Goldelektroden, d. h., dass sowohl die erste Arbeitselektrode als auch die zweite Arbeitselektrode bevorzugt Gold umfassen bzw. aus Gold bestehen.

Die erste Arbeitselektrode und/oder die zweite Arbeitselektrode können jeweils sowohl mit als auch ohne ein Trägermaterial bzw. eine Elektrodenmembran in einem erfindungsgemäßen elektrochemischen Gassensor eingesetzt werden. In einer weiteren Ausgestaltung kann die erste Arbeitselektrode und/oder die zweite Arbeitselektrode an oder auf einem Polymervlies oder Glasvlies angeordnet sein. Ein Polymervlies kann beispielsweise ein hydrophiles Polyolefinvliese oder ein perfluoriertes Vlies, z.B. ein hydrophilisiertes PTFE-Vlies (perfluorierte Tetrafluoroethylenvliese) sein. Die erste Arbeitselektrode kann in einer Ausgestaltung auf einer gasdurchlässigen und vorzugsweise elektrolytdichten Sperrschicht angeordnet sein. Die erste Arbeitselektrode kann erfindungsgemäß so angeordnet sein, dass das Analytgas beim Eindiffundieren in den elektrochemischen Gassensor direkt an die erste Arbeitselektrode gelangt.

Die Referenzelektrode ist erfindungsgemäß zwischen der ersten Arbeitselektrode und der zweiten Arbeitselektrode angeordnet. Bevorzugt umfasst die Referenzelektrode ein Elektrodenmaterial welches ausgewählt ist aus der Gruppe bestehend aus oder umfassend: Rutheniumoxid (RuO2), Kohlenstoffnanoröhren, stickstoffdotierte Kohlenstoffnanoröhren, Graphen, diamantähnlicher Kohlenstoff und reduziertes Graphenoxid. Weiter bevorzugt umfasst oder besteht die Referenzelektrode aus einem Elektrodenmaterial welches ausgewählt ist aus der Gruppe: Rutheniumoxid, Kohlenstoffnanoröhren und stickstoffdotierten Kohlenstoffnanoröhren. Ganz besonders bevorzugt umfasst die Referenzelektrode Rutheniumoxid und/oder stickstoffdotierte Kohlenstoffnanoröhren bzw. besteht aus diesen. Überraschenderweise hat sich herausgestellt, dass eine Rutheniumoxid- und/oder eine stickstoffdotierte Kohlenstoffnanoröhren-umfassende Referenzelektrode äußerst robust in dem erfindungsgemäßen elektrochemischen Gassensor arbeitet, d. h., dass das Messsignal auch bei hohen Konzentrationen des Analytgases und langer Exposition mit dem Analytgas über mehrere Stunden nicht verfälscht wird. Die Erfinder haben überraschend gefunden, dass die an der Referenzelektrode anliegende elektrische Spannung bei Einsatz von Hydridverbindungen bzw. von Hydridgasen, insbesondere bei Einsatz von Phosphin als Analytgas, besonders stabil ist.

Das Gehäuse eines erfindungsgemäßen elektrochemischen Gassensors ist in einer Ausgestaltung so beschaffen, dass das Analytgas durch das Gehäuse in den elektrochemischen Gassensor diffundieren kann. In einer bevorzugten Ausgestaltung weist das Gehäuse eine Öffnung bzw. eine Diffusionsmembran zum Gasaustausch mit der Umgebung und einen elektrolytgefüllten Reaktionsraum auf, in welchem die Elektroden (erste Arbeitselektrode und zweite Arbeitselektrode, Gegenelektrode sowie Referenzelektrode) angeordnet sind. In dieser Ausgestaltung diffundiert das Analytgas beispielsweise durch die Diffusionsmembran und optional eine Arbeitselektrodenmembran in den Reaktionsraum des Gassensors hinein und weiter an die erste Arbeitselektrode. An der ersten Arbeitselektrode findet eine Hinreaktion, an der Gegenelektrode eine Rückreaktion statt.

Bei einem bevorzugten elektrochemischen Gassensor diffundiert in einer Ausgestaltung das Analytgas aus der Umgebungsluft durch eine bevorzugt elektrolytdichte, ferner bevorzugt hydrophobe (wasserabweisende) Diffusionsmembran in den elektrochemischen Gassensor und gelangt an die Dreiphasengrenze, welche von der ersten Arbeitselektrode, dem Elektrolyten sowie dem Analytgas gebildet wird. Das Analytgas reagiert schließlich an der Arbeitselektrode (Hinreaktion), wobei die sich an der Gegenelektrode bildenden Reaktionsprodukte (Rückreaktion) schließlich wieder in den Elektrolyten gelangen. An der Gegenelektrode bildet sich dabei Wasser. Ohne an die Theorie gebunden zu sein gehen die Erfinder davon aus, dass, bei Einsatz von Phosphin als Analytgas, die folgenden Reaktionen an der ersten Arbeitselektrode und an der Gegenelektrode ablaufen:
Oxidation von Phosphin zu Phosphat an der ersten Arbeitselektrode (Kathode) gemäß folgender Gleichung:

PH3 +4 H2O → H3PO4 + 8H+

Reduktion von Sauerstoff zu 2 O2- an der Gegenelektrode (Anode) gemäß folgender Gleichung:

2 02 → 4 02-

Aus beiden obigen, auch als Halbzellenreaktionen bezeichneten Reaktionen, ergibt sich die folgende, innerhalb des erfindungsgemäßen elektrochemischen Gassensors ablaufende Gesamtreaktion:

PH3 + 202 + 4H2O → H3PO4 +4H2O

Bei Beaufschlagung des erfindungsgemäßen elektrochemischen Gassensors mit Phosphin als Analytgas wird somit, ohne an die Theorie gebunden zu sein, an der ersten Arbeitselektrode Phosphin zu Phosphorsäure oxidiert und Sauerstoff an der Gegenelektrode gemäß obiger Gleichung reduziert.

In einer weiter bevorzugten Ausgestaltung weist das Gehäuse sowohl eine erste Diffusionsmembran als auch eine zweite Diffusionsmembran auf. Dies hat sich als besonders vorteilhaft erwiesen, da beispielsweise der Elektrolyt hygroskopisch sein kann, was zu einer Volumenzunahme des Elektrolyten führen kann, da der Elektrolyt beispielsweise in der Umgebungsluft befindliches Wasser aufnehmen kann. Daher kann es von Vorteil sein, wenigstens eine zweite Diffusionsmembran im Gehäuse anzuordnen, durch welche ein Druckausgleich mit der Umgebung ermöglicht wird. Prinzipiell kann die zweite Diffusionsmembran überall innerhalb des Gehäuses angeordnet sein. Beim Eindiffundieren des Analytgases durch die erste Diffusionsmembran gelangt das Analytgas an die Dreiphasengrenze zwischen erster Arbeitselektrode, Analytgas und Elektrolyt. Dabei läuft, bei Einsatz von Phosphin als Analytgas, die oben angegebene Hinreaktion an der ersten Arbeitselektrode, sprich die Oxidation von Phosphin zu Phosphorsäure, ab.

Erfindungsgemäß weist der elektrochemische Gassensor eine erste Diffusionsmembran und eine im Wesentlichen dieser gegenüberliegende zweite Diffusionsmembran auf. Die zweite Diffusionsmembran ist insbesondere deshalb von Vorteil, da innerhalb des elektrochemischen Gassensors entstehende Produkte wie beispielsweise Gase oder aber auch Wasser durch die zweite Diffusionsmembran als Gasauslass wieder in die Umgebung diffundieren können. Ebenfalls ist eine zweite Öffnung in Form einer zweite Diffusionsmembran von Vorteil, da sich innerhalb des elektrochemischen Gassensors ein Über- oder Unterdruck entstehen kann, welche durch die Diffusionsmembran ebenfalls abgeführt werden kann. Über- oder Unterdruck kann beispielsweise durch Änderungen in der Umgebungstemperatur entstehen.

Durch die zweite Diffusionsmembran kann bei den zur Entwesung nötigen hohen Gaskonzentrationen auch Analytgas in den elektrochemischen Gassensor diffundieren, analog der ersten Diffusionsmembran. Erfindungsgemäß ist die Referenzelektrode zwischen der ersten Arbeitselektrode und der zweiten Arbeitselektrode angeordnet. In dieser Ausgestaltung gelangt das Analytgas beim Eindiffundieren in den elektrochemischen Gassensor durch die zweite Diffusionsmembran und eine optionale Arbeitselektrodenmembran an die zweite Arbeitselektrode und wird an der zweiten Arbeitselektrode analog zur ersten Arbeitselektrode oxidiert. Durch die erfindungsgemäße Anordnung der Referenzelektrode zwischen der ersten Arbeitselektrode und der zweiten Arbeitselektrode wurde überraschenderweise gefunden, dass die Signalstabilität des erfindungsgemäßen elektrochemischen Gassensors auch bei den zur Entwesung erforderlichen hohen Gaskonzentrationen an Analytgas nicht "einbricht", d. h., dass das Messsignal auch bei den hohen Konzentrationen nicht verfälscht wird. Dabei fungiert die zweite Arbeitselektrode als eine Art Schutzelektrode, welche dazu eingerichtet ist, sämtliches in den elektrochemischen Gassensor diffundierendes Analytgas zu oxidieren, welches nicht bereits an der ersten Arbeitselektrode oxidiert wurde. Durch die erfindungsgemäße Anordnung der Referenzelektrode zwischen der ersten Arbeitselektrode und der zweiten Arbeitselektrode wird sichergestellt, dass wenig oder idealerweise kein Analytgas an Referenzelektrode gelangt. Es ist dem einschlägigen Fachmann bekannt, dass das Messsignal des elektrochemischen Gassensors verfälscht wird, wenn Analytgas durch den Elektrolyten an die Referenzelektrode gelangt.

Die Gegenelektrode ist bevorzugt so innerhalb des elektrochemischen Gassensors angeordnet, dass diese leicht mit der Umgebungsatmosphäre, in welcher neben dem Analytgas auch Sauerstoff enthalten ist, vorzugsweise über eine Diffusionsmembran, in Kontakt kommen kann. Das Material für die Gegenelektrode ist so gewählt, dass an dieser in dem erfindungsgemäßen elektrochemischen Gassensor Sauerstoff gemäß der obigen Gleichung reduziert werden kann. Für die Gegenelektrode kommen sämtliche, dem einschlägigen Fachmann bekannten Elektrodenmaterialien in Betracht. Die Erfinder haben gefunden, dass das Elektrodenmaterial für die Gegenelektrode unkritisch ist. In einer bevorzugten Ausgestaltung, in welcher das Gehäuse des elektrochemischen Gassensors eine erste Diffusionsmembran und eine im Wesentlichen gegenüberliegende zweite Diffusionsmembran aufweist, ist die Gegenelektrode unterhalb der zweiten Diffusionsmembran angeordnet (d.h. in einer Längsrichtung oder Gaseintrittsrichtung des Gassensors betrachtet weiter außenliegend als die zweite Diffusionsmembran), insbesondere bevorzugt zwischen der zweiten Diffusionsmembran und der zweiten Arbeitselektrode. Durch diese Anordnung kann die für die Stabilität des erfindungsgemäßen elektrochemischen Gassensors erforderliche Rückreaktion, sprich die Reduktion von Sauerstoff zu 2 O2-, ablaufen. Die Anordnung der Gegenelektrode unterhalb einer Diffusionsmembran, vorzugsweise unterhalb einer zweiten Diffusionsmembran, sorgt dafür, dass ein steter Gasaustausch zwischen der Umgebungsatmosphäre und der Gegenelektrode stattfinden kann. Dadurch kann die an der Gegenelektrode ablaufende Reduktion von in der Umgebungsatmosphäre enthaltenen Sauerstoff stattfinden.

In einer weiteren bevorzugten Ausgestaltung ist die Referenzelektrode zumindest teilweise von einer bevorzugt für das Analytgas gasdichten Folie umgeben. Dadurch wird ein in-Kontakt-kommen zwischen dem Analytgas und der Referenzelektrode zusätzlich verhindert bzw. erschwert, was wiederum eine weitere Verbesserung der Signalstabilität zur Folge hat. Insbesondere bevorzugt wird die Referenzelektrode zumindest teilweise von einer Polyvinylidenfluorid-Folie (PVDF-folie) umgeben. Ganz besonders bevorzugt ist ein elektrochemischer Gassensor aufweisend eine zumindest teilweise von einer PVDF-folie umgebenen stickstoffdotierte Kohlenstoffnanoröhren-umfassende Referenzelektrode oder eine zumindest teilweise von einer PVDF-folie umgebenen RuO2-Referenzelektrode bereitgestellt. Umgeben oder umwickelt bzw. eingewickelt meint, dass die Referenzelektrode idealerweise vom Analytgas abgeschirmt wird, jedoch weiterhin mit dem Elektrolyten ionisch-leitend in Kontakt steht.

In einem bevorzugten elektrochemischen Gassensor weist das Gehäuse zwei sich im Wesentlichen gegenüberliegend angeordnete Diffusionsmembranen auf. In diesem bevorzugten elektrochemischen Gassensor diffundiert Analytgas durch die erste Diffusionsmembran und optional eine Arbeitselektrodenmembran in den Elektrolyten des elektrochemischen Gassensors. An der Dreiphasengrenze aus Analytgas, erster Arbeitselektrode und Elektrolyt wird das Analytgas zumindest teilweise oxidiert. Zwischen der ersten Diffusionsmembran und der zweiten Diffusionsmembran sind in Diffusionsrichtung des Analytgases von der ersten Diffusionsmembran in Richtung der zweiten Diffusionsmembran zunächst die erste Arbeitselektrode, danach die Referenzelektrode, danach die zweite Arbeitselektrode, danach die Gegenelektrode angeordnet. In einer weiteren bevorzugten Ausgestaltung können zwischen der ersten Arbeitselektrode und der Referenzelektrode und/oder zwischen der Referenzelektrode und der zweiten Arbeitselektrode und/oder zwischen der zweiten Arbeitselektrode und der Gegenelektrode jeweils ein oder mehrere Separatoren angeordnet sein. Die Separatoren verhindern, dass es zwischen den Elektroden, also der ersten und zweiten Arbeitselektrode, Referenzelektrode und Gegenelektrode zu einem Kurzschluss kommt. Besonders bevorzugt befindet sich zwischen allen genannten Elektroden jeweils mindestens ein Separator. Bei den Separatoren handelt es sich beispielsweise um Glasvliese oder ähnliches. Diese Separatoren sind elektrolytdurchlässig ausgebildet und saugen den Elektrolyten auf und bilden somit den Träger für eine Elektrolytbrücke, sodass sich Ionen zwischen den einzelnen Elektroden bewegen können.

In einer weiteren bevorzugten Ausgestaltung ist es möglich, dass die zweite Arbeitselektrode zwei oder mehrere kurzgeschlossene Einzelelektroden umfasst. Auf diese Weise lässt sich die wirksame Oberfläche der zweiten Arbeitselektrode vergrößern, was wiederum dazu führt, dass in den elektrochemischen Gassensor diffundierendes Analytgas schneller oxidierbar ist. Dadurch lässt sich ebenfalls die Wahrscheinlichkeit verringern, dass in den elektrochemischen Gassensor diffundierendes Analytgas an die Referenzelektrode gelangt, was unerwünscht ist, da dies "einbrechen" des Messsignals führt, bzw. dadurch das Messsignal verfälscht wird, wie Eingangs erläutert.

Als mögliche Elektrolyten werden in einem erfindungsgemäßen elektrochemischen Gassensor insbesondere Lithiumchlorid, ionische Flüssigkeiten, Schwefelsäure und/oder eine Ethylencarbonat/Propylencarbonat-Lösung (ECPC-Lösung) mit einem Leitsalz, beispielsweise Tetrabuthylammonium-tosylat oder -mesylat eingesetzt. Unter ionischen Flüssigkeiten (Ionic Liquids, IL) versteht man grundsätzlich hochkonzentrierte, wässrige Salzlösungen oder auch Salze in flüssigem Zustand (sog. Molten Salts, MS), die hauptsächlich aus positiv und negativ geladenen Ionen bestehen. Bevorzugt wird Schwefelsäure (H2SO4) eingesetzt.

Erfindungsgemäß ist die Referenzelektrode zwischen der ersten Arbeitselektrode und der zweiten Arbeitselektrode angeordnet. In einem besonders bevorzugten elektrochemischen Gassensor, in welchem in Diffusionsrichtung von einer ersten Diffusionsmembran in Richtung zur im Wesentlichen gegenüberliegenden zweiten Diffusionsmembran zunächst die erste Arbeitselektrode, dann die Referenzelektrode, dann die zweite Arbeitselektrode, dann die Gegenelektrode angeordnet ist, weist die zweite Arbeitselektrode wenigstens ein Mittel auf, welche es ermöglicht, dass der Elektrolyt zwischen der Gegenelektrode und der Referenzelektrode beweglich ist. In anderen Worten ermöglicht das Mittel, dass der Elektrolyt hindurchfließen kann. In einer insbesondere bevorzugten Ausgestaltung weist die zweite Arbeitselektrode eine Öffnung und/oder eine Sekante auf, welche dazu ausgelegt ist, dass der Elektrolyt durch die Öffnung und/oder die Sekante hindurchfließen kann Die Öffnung und/oder die Sekante ist noch weiter bevorzugt in der zweiten Arbeitselektrode so ausgebildet, dass der Diffusionsweg zwischen der zweiten Arbeitselektrode und der Referenzelektrode möglichst groß ist. So ist es bevorzugt, dass die Referenzelektrode möglichst weit entfernt von der Öffnung und/oder der Sekante angeordnet ist. Dadurch wird der Diffusionsweg des im Elektrolyten befindlichen Analytgases von der zweiten Arbeitselektrode in Richtung der Referenzelektrode zusätzlich vergrößert, was eine zusätzliche Signalstabilität bewirkt, insbesondere bei sehr hohen Gaskonzentrationen an Analytgas, welche zur Entwesung nötig sind.

Der elektrochemische Gassensor kann weitere Elemente, wie eine Kopplungseinheit aufweisen, welche dazu eingerichtet sein kann, die innerhalb des elektrochemischen Gassensors befindlichen Elektroden, also die erste Arbeitselektrode, die zweite Arbeitselektrode, die Referenzelektrode und die Gegenelektrode und weitere, optionale Elektroden mit einer elektrischen Schaltung wie einem Potentiostaten oder einem Galvanostaten, elektrisch zu verbinden. Die Kopplungseinheit kann eine oder mehrere Kontaktpins aufweisen, welche beispielsweise über Platindrähte mit den Elektroden in elektrisch leitender Verbindung stehen können.

In einer weiteren Ausgestaltung umfasst der erfindungsgemäße elektrochemische Gassensor das Analytgas, wobei das Analytgas insbesondere im Elektrolyten gelöst ist.

Weiterhin umfasst die vorliegende Erfindung ein Messgerät zur quantitativen oder qualitativen Bestimmung eines Analytgases, welches eine Hydridverbindung umfasst. Das erfindungsgemäße Messgerät umfasst in einer bevorzugten Ausgestaltung eine Auswerteeinheit, welche einen elektrischen Strom, welcher zwischen der ersten Arbeitselektrode und der Gegenelektrode bei Beaufschlagung mit einem Analytgas fließt, misst. Somit kann anhand des gemessenen Stromes zwischen der ersten Arbeitselektrode und der Gegenelektrode die Konzentration des Analytgases bestimmt werden.

Weiterhin umfasst die vorliegende Erfindung ein Verfahren zur Konzentrationsbestimmung eines Analytgases umfassend eine Hydridverbindung. Das erfindungsgemäße Verfahren umfasst wenigstens die folgenden Schritte:
i. Beaufschlagen eines elektrochemischen Gassensors mit dem Analytgas, wobei der elektrochemische Gassensor wenigstens eine erste Arbeitselektrode, eine zweite Arbeitselektrode, eine Gegenelektrode, eine zwischen der ersten und zweiten Arbeitselektrode angeordnete Referenzelektrode und einen mit der ersten Arbeitselektrode, der zweiten Arbeitselektrode, der Gegenelektrode und der Referenzelektrode in leitendem Kontakt stehenden Elektrolyten umfasst, wobei das Gehäuse des elektrochemischen Gassensors eine erste Diffusionsmembran und eine zweite Diffusionsmembran aufweist, wobei die zweite Diffusionsmembran im Wesentlichen gegenüberliegend der ersten Diffusionsmembran angeordnet ist;
ii. Anlegen einer elektrischen Spannung zwischen der ersten Arbeitselektrode und der Referenzelektrode;
iii. Anlegen einer elektrischen Spannung zwischen der zweiten Arbeitselektrode und der Referenzelektrode
iv. zumindest teilweise Oxidation des Analytgases an der ersten Arbeitselektrode, wobei wenigstens ein Reaktionsprodukt zur Gegenelektrode migriert;
v. zumindest teilweise Reduktion von Sauerstoff an der Gegenelektrode;
vi. Messen des zwischen der ersten Arbeitselektrode und Gegenelektrode fließenden Stromes.

Bei dem erfindungsgemäßen Verfahren wird ein elektrochemischer Gassensor mit dem Analytgas beaufschlagt. Der elektrochemische Gassensor umfasst wenigstens eine erste Arbeitselektrode, eine zweite Arbeitselektrode, eine Gegenelektrode, eine zwischen der ersten Arbeitselektrode und zweiten Arbeitselektrode angeordnete Referenzelektrode und einen mit der ersten Arbeitselektrode, der zweiten Arbeitselektrode, der Gegenelektrode und der Referenzelektrode in leitendem Kontakt stehenden Elektrolyten. Das Analytgas umfasst wenigstens eine Hydridverbindung. Zwischen der ersten Arbeitselektrode und der Referenzelektrode sowie zwischen der zweiten Arbeitselektrode unter Referenzelektrode wird eine elektrische Spannung angelegt, insbesondere mit einem Potentiostaten. Das Anlegen der Spannung zwischen der ersten Arbeitselektrode und der Referenzelektrode (ii.) und das Anlegen der Spannung zwischen der zweiten Arbeitselektrode und der Referenzelektrode (iii.) geschieht vorzugsweise gleichzeitig, also konzertiert.

Bevorzugt ist die Spannung zwischen der ersten Arbeitselektrode und der Referenzelektrode sowie der zweiten Arbeitselektrode unter Referenzelektrode gleich. Das in den elektrochemischen Gassensor diffundierende Analytgas wird zumindest teilweise an der ersten Arbeitselektrode oxidiert. Bei Beaufschlagung des elektrochemischen Gassensors mit Phosphin als Analytgas wird das Phosphin zu Phosphorsäure oxidiert. An der Gegenelektrode wird Sauerstoff reduziert. Der bei dieser Reaktion zwischen der ersten Arbeitselektrode und der Gegenelektrode fließende Strom wird gemessen. Der Strom zwischen der ersten Arbeitselektrode und der Gegenelektrode ist proportional zum Umsatz des Analytgases an der ersten Arbeitselektrode.

Bei der zur Entwesung erforderlichen hohen Gaskonzentrationen an Analytgas wird das Analytgas, welches nicht an der ersten Arbeitselektrode umgesetzt wird, an der zweiten Arbeitselektrode oxidiert. Dadurch wird verhindert, dass Analytgas an die Referenzelektrode diffundiert, was zu einer Verfälschung der Messergebnisse führen würde. Der für diesen Fall zwischen der zweiten Arbeitselektrode und der Gegenelektrode fließende Strom wird vorzugsweise nicht gemessen. Dies bedeutet mit anderen Worten, dass die Konzentration des Analytgases ausschließlich durch den Stromfluss zwischen der ersten Arbeitselektrode und der Gegenelektrode ermittelt wird. Die zweite Arbeitselektrode fungiert insbesondere als eine Art Schutzelektrode, welche dazu eingerichtet ist Analytgas, welches nicht bereits an der ersten Arbeitselektrode oxidiert wurde, umzusetzen, sodass kein Analytgas an die Referenzelektrode diffundieren kann.

Der erfindungsgemäße elektrochemischen Gassensors bzw. das erfindungsgemäße Messgerät kann zur Konzentrationsbestimmung eines Analytgases umfassend eine Hydridverbindung verwendet werden.

Die Vorteile des erfindungsgemäßen elektrochemischen Gassensors sowie dessen möglicher Aufbau wird im nachfolgenden anhand der folgenden Figur dargestellt. Diese zeigt:

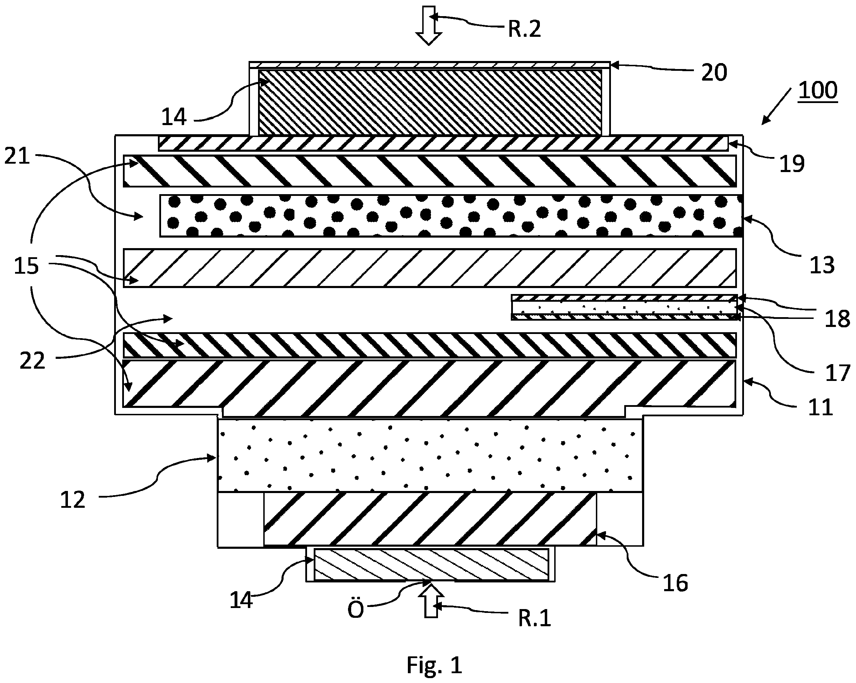

Fig. 1: einen Querschnitt eines erfindungsgemäßen elektrochemischen Gassensors mit den innerhalb des Gehäuses befindlichen Elektroden.

Fig. 1 zeigt einen Querschnitt eines erfindungsgemäßen elektrochemischen Gassensors 100. Der Gassensor 100 umfasst ein Gehäuse 11, eine erste Arbeitselektrode 12, eine zweite Arbeitselektrode 13, eine Gegenelektrode 19 und eine Referenzelektrode 17. Die Referenzelektrode 17 ist mit einer gasundurchlässigen Folie 18 umgeben. Umgeben oder umwickelt bzw. eingewickelt meint, dass die Referenzelektrode idealerweise vom Analytgas abgeschirmt wird, jedoch weiterhin mit dem Elektrolyten ionisch-leitend umgeben ist. Die Referenzelektrode 17 ist zwischen der ersten Arbeitselektrode 12 und der zweiten Arbeitselektrode 13 angeordnet. Zwischen der ersten Arbeitselektrode 12 und der Referenzelektrode 17 sind jeweils elektrolytdurchlässige Trennschichten (Separatoren) 15 angeordnet. Diese Separatoren 15 verhindern, dass es zwischen den Elektroden 12, 17, 13 und 19 zu elektrischen Kurzschlüssen kommt. In den elektrochemischen Gassensor 100 eindiffundierendes Analytgas gelangt durch die Öffnung Ö in Richtung R.1 von unten in den elektrochemischen Gassensor 100 ein. Nach Durchdringen durch die gasdurchlässige Stützmembran 14 und der gasdurchlässigen Sperrschicht 16 gelangt das Analytgas, gelöst im Elektrolyten 22 an die erste Arbeitselektrode 12. An dieser findet eine chemische Reaktion statt. Bei Eindringen von Phosphin als Analytgas wird an der ersten Arbeitselektrode 12 Phosphin zu Phosphorsäure oxidiert. Zwischen der ersten Arbeitselektrode 12 und der Referenzelektrode 17 liegt eine Spannung an (nicht gezeigt). Bei der Oxidation von Phosphin an der ersten Arbeitselektrode 12 zu Phosphorsäure fließt ein elektrischer Strom zwischen der ersten Arbeitselektrode 12 und der Gegenelektrode 19. Mittels einer Auswerteeinheit (nicht gezeigt) kann anhand des Stromflusses zwischen der ersten Arbeitselektrode 12 und der Gegenelektrode 19 die Konzentration des Analytgases bestimmt werden. Zwischen der zweiten Arbeitselektrode 13 und der Referenzelektrode 17 liegt ebenfalls eine Spannung an (nicht gezeigt). Die zweite Arbeitselektrode 13 weist eine Öffnung oder Sekante 21 auf. Die Öffnung oder Sekante 21 ist dazu ausgebildet, dass der Elektrolyt 22 innerhalb des elektrochemischen Gassensors 100 die Elektroden 12, 17, 13 und 19 ionisch-leitend miteinander verbindet. Am oberen Ende des elektrochemischen Gassensors 100 befindet sich oberhalb der Gegenelektrode 19 eine weitere Stützmembran 14 sowie eine Abdeckung 20. Die Abdeckung 20 ist gasdurchlässig und dient unter anderem als Druckausgleich. Der innerhalb des elektrochemischen Gassensors 100 befindliche Elektrolyt 22 ist hygroskopisch, d. h., dass dieser Wasser aus der Umgebungsatmosphäre des elektrochemischen Gassensors aufnimmt. Damit innerhalb des elektrochemischen Gassensors 100 kein Überdruck entsteht, welcher dazu führen würde, dass Elektrolyt 22 aus dem elektrochemischen Gassensor 100 heraustreten würde, dient die obere gasdurchlässige Stützmembran 14 und die Abdeckung 20 als Druckausgleich. Bei der zur Entwesung erforderlichen hohen Gaskonzentration an Analytgas von bis zu 1000 ppm oder mehr dringt das Analytgas wie mit R.2 gezeigt auch von oben in den elektrochemischen Gassensor 100 ein. Das aus Richtung R.2 in den elektrochemischen Gassensor 100 diffundierende Analytgas wird an der zweiten Arbeitselektrode 13 oxidiert. Für den Fall, dass Phosphin als Analytgas gemessen wird, wird an der zweiten Arbeitselektrode 13 Phosphin zu Phosphorsäure oxidiert. Durch die erfindungsgemäße Anordnung der zweiten Arbeitselektrode 13 am oberen Ende des elektrochemischen Gassensors 100 wird verhindert, dass von oben in den elektrochemischen Gassensor 100 eindiffundierendes Analytgas an die Referenzelektrode 17 gelangt. Unterhalb der ersten Arbeitselektrode 12 sowie oberhalb der Gegenelektrode 19 befindet sich kein Elektrolyt 22.

### Bezugszeichenliste

100 Gassensor
11 Gehäuse
12 erste Arbeitselektrode
13 zweite Arbeitselektrode
14 gasdurchlässige Stützmembran
15 elektrolytdurchlässige Trennschichten (Separatoren)
16 Sperrschicht
17 Referenzelektrode
18 gasundurchlässige Folie
19 Gegenelektrode
20 Abdeckung
21 Sekante
22 Elektrolyt

## Patentansprüche

1. Elektrochemischer Gassensor (100) für ein Analytgas umfassend eine Hydridverbindung,
wobei der Gassensor (100) wenigstens umfasst:
a) ein Gehäuse (11), wobei innerhalb des Gehäuses (11) weiter angeordnet sind:
b) wenigstens eine erste Arbeitselektrode (12) und eine zweite Arbeitselektrode (13),
c) eine Gegenelektrode (19),
d) eine Referenzelektrode (17), und
e) einen mit der ersten Arbeitselektrode (12), der zweiten Arbeitselektrode (13), der Gegenelektrode (19) und der Referenzelektrode (17) in leitendem Kontakt stehenden Elektrolyten (22);
wobei die Referenzelektrode (17) zwischen der ersten Arbeitselektrode (12) und der zweiten Arbeitselektrode (13) angeordnet ist,
**dadurch gekennzeichnet, dass**
das Gehäuse (11) eine erste Diffusionsmembran und eine zweite Diffusionsmembran aufweist, wobei die zweite Diffusionsmembran im Wesentlichen gegenüberliegend der ersten Diffusionsmembran angeordnet ist.

2. Elektrochemischer Gassensor (100) nach Anspruch 1,
wobei
- zwischen der ersten Arbeitselektrode (12) und der Referenzelektrode (17), oder
- zwischen der zweiten Arbeitselektrode (13) und der Referenzelektrode (17), oder
- zwischen der ersten Arbeitselektrode (12) und der Referenzelektrode (17) und zwischen der zweiten Arbeitselektrode (13) und der Referenzelektrode (17) ein Separator (15) angeordnet ist, bevorzugt zwischen der ersten Arbeitselektrode (12) und der Referenzelektrode (17) und zwischen der zweiten Arbeitselektrode (13) und der Referenzelektrode (17).

3. Elektrochemischer Gassensor (100) nach einem der vorhergehenden Ansprüche,
wobei die Gegenelektrode (19) zwischen der zweiten Arbeitselektrode (13) und dem Gehäuse (11) angeordnet ist,
wobei bevorzugt zwischen der Gegenelektrode (19) und der zweiten Arbeitselektrode (13) ein Separator (15) angeordnet ist.

4. Elektrochemischer Gassensor (100) nach einem der vorhergehenden Ansprüche für Phospin (PH3), Boran (BH3), Diboran (B2H6), Arsin (AsH3), SeH2 als Analytgas, insbesondere für Phospin.

5. Elektrochemischer Gassensor (100) nach einem der vorhergehenden Ansprüche,
wobei die erste Arbeitselektrode (12) und/oder die zweite Arbeitselektrode (13) ein Elektrodenmaterial umfasst ausgewählt aus der Gruppe: Gold, Platin, Rhodium, Ruthenium und Iridium, bevorzugt Gold.

6. Elektrochemischer Gassensor (100) nach einem der vorhergehenden Ansprüche,
wobei die Referenzelektrode (17) ein Elektrodenmaterial umfasst ausgewählt aus der Gruppe: Rutheniumoxid (RuO2), Kohlenstoffnanoröhren, stickstoffdotierten Kohlenstoffnanoröhren, Graphen, diamantähnlicher Kohlenstoff, reduziertes Graphenoxid,
bevorzugt ausgewählt aus der Gruppe: Rutheniumoxid, Kohlenstoffnanoröhren und stickstoffdotierten Kohlenstoffnanoröhren,
insbesondere bevorzugt stickstoffdotierten Kohlenstoffnanoröhren.

7. Elektrochemischer Gassensor (100) nach einem der vorherigen Ansprüche,
wobei
a. in einem anwendungsgemäßen Zustand das Analytgas zumindest teilweise durch die erste Diffusionsmembran in Richtung (R.1) der zweiten Diffusionsmembran diffundiert,
wobei die zweite Diffusionsmembran im Wesentlichen gegenüberliegend der ersten Diffusionsmembran angeordnet ist,
wobei in Richtung von der ersten Diffusionsmembran zur zweiten Diffusionsmembran zunächst die erste Arbeitselektrode (12), anschließend die Referenzelektrode (17), anschließend die zweite Arbeitselektrode (13) und anschließend die Gegenelektrode (19) angeordnet ist, und/oder
b. in einem anwendungsgemäßen Zustand das Analytgas zumindest teilweise durch die zweite Diffusionsmembran in Richtung (R.2) der ersten Diffusionsmembran diffundiert,
wobei die zweite Diffusionsmembran im Wesentlichen gegenüberliegend der ersten Diffusionsmembran angeordnet ist,
wobei das Analytgas zumindest teilweise zunächst mit der Gegenelektrode (19) und anschließend mit der der zweiten Arbeitselektrode (13) in Kontakt kommt.

8. Elektrochemischer Gassensor (100) nach einem der vorhergehenden Ansprüche,
wobei die zweite Arbeitselektrode (13) mehrere Einzelelektroden umfasst.

9. Elektrochemischer Gassensor (100) nach einem der vorherigen Ansprüche,
wobei der Elektrolyt (22) ausgewählt ist aus einem oder mehreren Mitgliedern der Gruppe: Lithiumchlorid, ionische Flüssigkeiten, Schwefelsäure und ECPC-Tetrabuthylammonium-tosylat oder -mesylat-Lösung.

10. Elektrochemischer Gassensor (100) nach einem der vorherigen Ansprüche,
wobei die zweite Arbeitselektrode (13) eine Öffnung und/oder eine Sekante (21) aufweist, welche dazu ausgelegt ist, dass der Elektrolyt (22) hindurchfließen kann.

11. Elektrochemischer Gassensor (100) nach einem der vorherigen Ansprüche,
wobei die Referenzelektrode (17) zumindest teilweise von einer Folie (18) umgeben ist, vorzugsweise mit einer für das Analytgas gasundurchlässigen Folie (18), insbesondere mit Polyvinylidenfluorid-Folie.

12. Elektrochemischer Gassensor (100) nach einem der vorherigen Ansprüche,
wobei der elektrochemische Gassensor (100) das Analytgas umfasst, vorzugsweise gelöst im Elektrolyten (22).

13. Messgerät zur quantitativen oder qualitativen Bestimmung eines Analytgases umfassend eine Hydridverbindung,
zumindest umfassend einen elektrochemischen Gassensor (100) nach einem der Ansprüche 1 bis 12.

14. Verfahren zur Konzentrationsbestimmung eines Analytgases umfassend eine Hydridverbindung,
wobei das Verfahren wenigstens folgende Schritte umfasst:
i. Beaufschlagen eines elektrochemischen Gassensors (100) mit dem Analytgas,
wobei der elektrochemische Gassensor (100) wenigstens eine erste Arbeitselektrode (12), eine zweite Arbeitselektrode (13), eine Gegenelektrode (19), eine zwischen der ersten (12) und zweiten Arbeitselektrode (13) angeordnete Referenzelektrode (17) und einen mit der ersten Arbeitselektrode (12), der zweiten Arbeitselektrode (13), der Gegenelektrode (19) und der Referenzelektrode (17) in leitendem Kontakt stehenden Elektrolyten (22) umfasst, wobei ein Gehäuse (11) des elektrochemischen Gassensors (100) eine erste Diffusionsmembran und eine zweite Diffusionsmembran aufweist, wobei die zweite Diffusionsmembran im Wesentlichen gegenüberliegend der ersten Diffusionsmembran angeordnet ist,
ii. Anlegen einer elektrischen Spannung zwischen der ersten Arbeitselektrode (12) und der Referenzelektrode (17),
iii. Anlegen einer elektrischen Spannung zwischen der zweiten Arbeitselektrode (13) und der Referenzelektrode (17),
iv. zumindest teilweise Oxidation des Analytgases an der ersten Arbeitselektrode (12),
wobei wenigstens ein Reaktionsprodukt zur Gegenelektrode (19) migriert,
v. zumindest teilweise Reduktion von Sauerstoff an der Gegenelektrode (19), und
vi. Messen des zwischen der ersten Arbeitselektrode (12) und Gegenelektrode (19) fließenden Stromes.

15. Verfahren nach Anspruch 14, wobei der elektrochemische Gassensor (100) ausgestaltet ist gemäß einem der Ansprüche 2 bis 12.

## Claims

1. Electrochemical gas sensor (100) for an analyte gas comprising a hydride compound,
wherein the gas sensor (100) comprises at least:
a) a housing (11), wherein the following are further arranged within the housing (11):
b) at least a first working electrode (12) and a second working electrode (13),
c) a counter electrode (19),
d) a reference electrode (17), and
e) an electrolyte (22) in conductive contact with the first working electrode (12), the second working electrode (13), the counter electrode (19), and the reference electrode (17);
wherein the reference electrode (17) is arranged between the first working electrode (12) and the second working electrode (13),
**characterized in that**
the housing (11) has a first diffusion membrane and a second diffusion membrane, wherein the second diffusion membrane is arranged substantially opposite the first diffusion membrane.

2. Electrochemical gas sensor (100) according to claim 1,
wherein
- between the first working electrode (12) and the reference electrode (17), or
- between the second working electrode (13) and the reference electrode (17), or
- between the first working electrode (12) and the reference electrode (17) and between the second working electrode (13) and the reference electrode (17) is arranged a separator (15), preferably between the first working electrode (12) and the reference electrode (17) and between the second working electrode (13) and the reference electrode (17).

3. Electrochemical gas sensor (100) according to either of the preceding claims,
wherein the counter electrode (19) is arranged between the second working electrode (13) and the housing (11),
wherein a separator (15) is arranged preferably between the counter electrode (19) and the second working electrode (13).

4. Electrochemical gas sensor (100) according to any of the preceding claims for phosphine (PH3), borane (BH3), diborane (B2H6), arsine (AsH3), or SeH2 as the analyte gas, in particular for phosphine.

5. Electrochemical gas sensor (100) according to any of the preceding claims,
wherein the first working electrode (12) and/or the second working electrode (13) comprises an electrode material selected from the group of: gold, platinum, rhodium, ruthenium, and iridium, preferably gold.

6. Electrochemical gas sensor (100) according to any of the preceding claims,
wherein the reference electrode (17) comprises an electrode material selected from the group of: ruthenium oxide (RuO2), carbon nanotubes, nitrogen-doped carbon nanotubes, graphene, diamond-like carbon, and reduced graphene oxide,
preferably selected from the group of: ruthenium oxide, carbon nanotubes, and nitrogen-doped carbon nanotubes,
particularly preferably nitrogen-doped carbon nanotubes.

7. Electrochemical gas sensor (100) according to any of the preceding claims,
wherein
a. in a state suitable for use, the analyte gas diffuses at least partially through the first diffusion membrane in the direction (R.1) towards the second diffusion membrane,
wherein the second diffusion membrane is arranged substantially opposite the first diffusion membrane,
wherein in the direction from the first diffusion membrane towards the second diffusion membrane the first working electrode (12) is arranged first, then the reference electrode (17), then the second working electrode (13), and then the counter electrode (19),
and/or
b. in a state suitable for use, the analyte gas diffuses at least partially through the second diffusion membrane in the direction (R.2) towards the first diffusion membrane,
wherein the second diffusion membrane is arranged substantially opposite the first diffusion membrane,
wherein the analyte gas comes into contact at least partially with the counter electrode (19) first and then with the the second working electrode (13).

8. Electrochemical gas sensor (100) according to any of the preceding claims,
wherein the second working electrode (13) comprises a plurality of single electrodes.

9. Electrochemical gas sensor (100) according to any of the preceding claims,
wherein the electrolyte (22) is selected from one or more members of the group of: lithium chloride, ionic liquids, sulfuric acid, and ECPC tetrabutylammonium tosylate or mesylate solution.

10. Electrochemical gas sensor (100) according to any of the preceding claims,
wherein the second working electrode (13) has an opening and/or a secant (21) designed to allow the electrolyte (22) to flow therethrough.

11. Electrochemical gas sensor (100) according to any of the preceding claims,
wherein the reference electrode (17) is surrounded at least partially by a film (18), preferably with a film (18) that is impermeable to the analyte gas, in particular with polyvinylidene fluoride film.

12. Electrochemical gas sensor (100) according to any of the preceding claims,
wherein the electrochemical gas sensor (100) comprises the analyte gas, preferably dissolved in the electrolyte (22).

13. Measuring device for quantitatively or qualitatively determining an analyte gas comprising a hydride compound,
at least comprising an electrochemical gas sensor (100) according to any of claims 1 to 12.

14. Method for determining the concentration of an analyte gas comprising a hydride compound,
wherein the method comprises at least the following steps:
i. subjecting an electrochemical gas sensor (100) to the analyte gas,
wherein the electrochemical gas sensor (100) comprises at least a first working electrode (12), a second working electrode (13), a counter electrode (19), a reference electrode (17) arranged between the first (12) and the second working electrode (13), and an electrolyte (22) in conductive contact with the first working electrode (12), the second working electrode (13), the counter electrode (19), and the reference electrode (17), wherein a housing (11) of the electrochemical gas sensor (100) has a first diffusion membrane and a second diffusion membrane, wherein the second diffusion membrane is arranged substantially opposite the first diffusion membrane,
ii. applying an electrical voltage between the first working electrode (12) and the reference electrode (17),
iii. applying an electrical voltage between the second working electrode (13) and the reference electrode (17),
iv. at least partially oxidizing the analyte gas at the first working electrode (12), wherein at least one reaction product migrates to the counter electrode (19),
v. at least partially reducing oxygen at the counter electrode (19), and
vi. measuring the current flowing between the first working electrode (12) and the counter electrode (19).

15. Method according to claim 14, wherein the electrochemical gas sensor (100) is configured according to any of claims 2 to 12.

## Revendications

1. Capteur de gaz électrochimique (100) pour un gaz analyte comprenant un composé hydrure,
dans lequel le capteur de gaz (100) comprend au moins :
a) un boîtier (11), dans lequel sont en outre disposés à l'intérieur du boîtier (11) :
b) au moins une première électrode de travail (12) et une seconde électrode de travail (13),
c) une contre-électrode (19),
d) une électrode de référence (17), et
e) un électrolyte (22) en contact conducteur avec la première électrode de travail (12), la seconde électrode de travail (13), la contre-électrode (19) et l'électrode de référence (17) ;
dans lequel l'électrode de référence (17) est disposée entre la première électrode de travail (12) et la seconde électrode de travail (13),
**caractérisé en ce que**
le boîtier (11) comprend une première membrane de diffusion et une seconde membrane de diffusion, dans lequel la seconde membrane de diffusion est disposée sensiblement à l'opposé de la première membrane de diffusion.

2. Capteur de gaz électrochimique (100) selon la revendication 1,
dans lequel
- entre la première électrode de travail (12) et l'électrode de référence (17), ou
- entre la seconde électrode de travail (13) et l'électrode de référence (17), ou
- entre la première électrode de travail (12) et l'électrode de référence (17) et entre la seconde électrode de travail (13) et l'électrode de référence (17) est disposé un séparateur (15), de préférence entre la première électrode de travail (12) et l'électrode de référence (17) et entre la seconde électrode de travail (13) et l'électrode de référence (17).

3. Capteur de gaz électrochimique (100) selon l'une des revendications précédentes,
dans lequel la contre-électrode (19) est disposée entre la seconde électrode de travail (13) et le boîtier (11),
dans lequel, de préférence, un séparateur (15) est disposé entre la contre-électrode (19) et la seconde électrode de travail (13).

4. Capteur de gaz électrochimique (100) selon l'une des revendications précédentes pour la phospine (PH3), le borane (BH3), le diborane (B2H6), l'arsine (AsH3), le SeH2 comme gaz analyte, en particulier pour la phospine.

5. Capteur de gaz électrochimique (100) selon l'une des revendications précédentes,
dans lequel la première électrode de travail (12) et/ou la seconde électrode de travail (13) comprennent un matériau d'électrode choisi dans le groupe comprenant : or, platine, rhodium, ruthénium et iridium, de préférence or.

6. Capteur de gaz électrochimique (100) selon l'une des revendications précédentes,
dans lequel l'électrode de référence (17) comprend un matériau d'électrode choisi dans le groupe comprenant : oxyde de ruthénium (RuO2), nanotubes de carbone, nanotubes de carbone dopés à l'azote, graphène, carbone semblable au diamant, oxyde de graphène réduit,
de préférence choisi dans le groupe comprenant : oxyde de ruthénium, nanotubes de carbone et nanotubes de carbone dopés à l'azote,
de manière particulièrement préférée nanotubes de carbone dopés à l'azote.

7. Capteur de gaz électrochimique (100) selon l'une des revendications précédentes,
dans lequel
a. dans un état conforme à l'utilisation, le gaz analyte diffuse au moins partiellement à travers la première membrane de diffusion dans la direction (R.1) de la seconde membrane de diffusion,
dans lequel la seconde membrane de diffusion est disposée sensiblement à l'opposé de la première membrane de diffusion,
dans lequel sont disposées, dans la direction allant de la première membrane de diffusion à la seconde membrane de diffusion, d'abord la première électrode de travail (12), puis l'électrode de référence (17), puis la seconde électrode de travail (13), puis la contre-électrode (19),
et/ou
b. dans un état conforme à l'utilisation, le gaz analyte diffuse au moins partiellement à travers la seconde membrane de diffusion dans la direction (R.2) de la première membrane de diffusion,
dans lequel la seconde membrane de diffusion est disposée sensiblement à l'opposé de la première membrane de diffusion,
dans lequel le gaz analyte vient au moins partiellement en contact d'abord avec la contre-électrode (19), puis avec la la seconde électrode de travail (13).

8. Capteur de gaz électrochimique (100) selon l'une des revendications précédentes,
dans lequel la seconde électrode de travail (13) comprend plusieurs électrodes individuelles.

9. Capteur de gaz électrochimique (100) selon l'une des revendications précédentes,
dans lequel l'électrolyte (22) est choisi parmi un ou plusieurs membres du groupe comprenant : chlorure de lithium, liquides ioniques, acide sulfurique et solution de tosylate ou de mésylate de tétrabutylammonium ECPC.

10. Capteur de gaz électrochimique (100) selon l'une des revendications précédentes,
dans lequel la seconde électrode de travail (13) comprend une ouverture et/ou une sécante (21) qui sont conçues pour permettre à l'électrolyte (22) de s'écouler à travers celles-ci.

11. Capteur de gaz électrochimique (100) selon l'une des revendications précédentes,
dans lequel l'électrode de référence (17) est entourée au moins partiellement d'une feuille (18), de préférence d'une feuille (18) imperméable au gaz analyte, en particulier d'une feuille de polyfluorure de vinylidène.

12. Capteur de gaz électrochimique (100) selon l'une des revendications précédentes,
dans lequel le capteur de gaz électrochimique (100) comprend le gaz analyte, de préférence dissous dans l'électrolyte (22).

13. Appareil de mesure pour la détermination quantitative ou qualitative d'un gaz analyte comprenant un composé hydrure,
comprenant au moins un capteur de gaz électrochimique (100) selon l'une des revendications 1 à 12.

14. Procédé pour la détermination de la concentration d'un gaz analyte comprenant un composé hydrure,
dans lequel le procédé comprend au moins les étapes suivantes :
i. exposition d'un capteur de gaz électrochimique (100) au gaz analyte,
dans lequel le capteur électrochimique de gaz (100) comprend au moins une première électrode de travail (12), une seconde électrode de travail (13), une contre-électrode (19), une électrode de référence (17) disposée entre la première (12) et la seconde électrode de travail (13), et un électrolyte (22) en contact conducteur avec la première électrode de travail (12), la seconde électrode de travail (13), la contre-électrode (19) et l'électrode de référence (17), dans lequel un boîtier (11) du capteur de gaz électrochimique (100) présente une première membrane de diffusion et une seconde membrane de diffusion, dans lequel la seconde membrane de diffusion est disposée sensiblement à l'opposé de la première membrane de diffusion,
ii. application d'une tension électrique entre la première électrode de travail (12) et l'électrode de référence (17),
iii. application d'une tension électrique entre la seconde électrode de travail (13) et l'électrode de référence (17),
iv. oxydation au moins partielle du gaz analyte au niveau de la première électrode de travail (12),
dans lequel au moins un produit de réaction migre vers la contre-électrode (19),
v. réduction au moins partielle de l'oxygène au niveau de la contre-électrode (19), et
vi. mesure du courant circulant entre la première électrode de travail (12) et la contre-électrode (19).

15. Procédé selon la revendication 14, dans lequel le capteur de gaz électrochimique (100) est configuré selon l'une des revendications 2 à 12.
